# EUROPEAN PATENT SPECIFICATION

(11) **EP 3 576 428 B1**
(45) Date of publication and mention of the grant of the patent: **28.12.2022**
(21) Application number: 18744293.4
(22) Date of filing: 10.01.2018
(51) Int. Cl.: G01H 3/04, G01H 13/00, G01S 7/521, H04R 3/00, G01S 15/931, G01S 7/52

(54) **ULTRASONIC APPARATUS WITH AN ANOMALY DETERMINING UNIT**
ULTRASCHALLVORRICHTUNG MIT EINER ANOMALIEBESTIMMUNGSEINHEIT
DISPOSITIF À ULTRASONS AVEC UNITÉ DE DÉTERMINATION DE L'ANOMALIE

(30) Priority: 25.01.2017 JP 2017011157
(43) Date of publication of application: 04.12.2019
(73) Proprietor: Murata Manufacturing Co., Ltd., Nagaokakyo-shi, Kyoto 617-8555 (JP)
(72) Inventor: WATANABE, Kosuke, Nagaokakyo-shi Kyoto 617-8555 (JP); NAKAO, Motoyasu, Nagaokakyo-shi Kyoto 617-8555 (JP)
(74) Representative: Reeve, Nicholas Edward
(86) International application number: PCT/JP2018/000268
(87) International publication number: WO 2018/139192

(56) References cited:
- DE-A1-102014 106 011
- JP-A- 2003 000 610
- JP-A- 2009 254 819
- JP-A- 2014 115 255
- JP-A- 2015 010 888
- JP-B2- 2 998 232
- JP-B2- 2 998 232
- JP-B2- 4 703 700
- US-A1- 2007 081 576
- US-A1- 2009 259 244
- US-A1- 2016 223 658

## Description

### Technical Field

The present invention relates to an ultrasonic apparatus, and particularly relates to an ultrasonic apparatus capable of detecting anomalies of an ultrasonic transducer included therein.

### Background Art

Ultrasonic apparatuses are used in practice, in which an ultrasonic transducer transmits ultrasonic waves, receives reflected waves from an object to be detected, and thereby measures, for example, a distance to the object to be detected.

If a foreign substance, such as mud, adheres to the vibrating surface of the ultrasonic transducer, or if water droplets adhering to the vibrating surface freeze, the ultrasonic transducer is unable to transmit and receive waves. This leads to failure in the detection of an obstacle existing in front of the ultrasonic transducer.

Japanese Patent No. 2998232 (Patent Document 1) discloses an ultrasonic sensor that is capable of detecting adhesion of a foreign substance, such as mud. This ultrasonic sensor detects the resonant frequency of an ultrasonic vibrator, monitors and compares the resonant frequency with the natural frequency, and thereby detects an anomaly in the operation of the ultrasonic vibrator.

The resonant frequency changes as the temperature changes. Therefore, with an anomaly detecting method which involves using a measured resonant frequency alone, it may be difficult to distinguish between an anomaly and a temperature change.

We have appreciated it would be desirable to provide an ultrasonic apparatus that is capable of accurately detecting anomalies of an ultrasonic transducer.

DE102014106011 discloses a method for detecting a locked state of an ultrasonic sensor of a motor vehicle, in which state a current actual value of at least one oscillation parameter of the ultrasonic sensor is sensed and is compared with at least one limiting value by means of an evaluation device in order to detect the locked state, wherein a probability value which specifies the current probability of the locked state of the ultrasonic sensor is determined as a function of a measured variable of at least one sensor which is different from the ultrasonic sensor, and the locked state is additionally detected taking into account the probability value.

US2009259244 discloses a power supply apparatus for operation for outputting power to a surgical instrument including a temperature detection section for detecting a temperature of the surgical instrument, and an abnormality detection section for detecting an abnormality of the surgical instrument on the basis of the detected temperature. The temperature detection section detects the temperature by measuring the electric capacitance of the surgical instrument or directly measures the temperature of the surgical instrument by using a temperature measurement device. More specifically, the abnormality detection section detects the abnormality according to whether or not a temperature variation amount of the surgical instrument per unit time exceeds a predetermined threshold. Further, when the abnormality detection section detects an abnormality, the abnormality detection section stops the output of the power to the surgical instrument. By detecting an abnormality in the manner described above, the surgical instrument can be prevented from being broken.

US2016223658 discloses a method for detecting a blocked state of an ultrasonic sensor of a motor vehicle, wherein an actual value of at least one oscillation parameter of the ultrasonic sensor is sensed and is compared with a reference value by means of an evaluation unit in order to detect a blocked state, wherein a current temperature to which the ultrasonic sensor is exposed is detected by means of a temperature detecting device, and the reference value is determined as a function of the current temperature by means of the evaluation unit.

JP2014115255 discloses an ultrasound sensor comprises a piezoelectric vibrator, a drive unit that drives the piezoelectric vibrator, a variable capacity element connected in parallel to the piezoelectric vibrator, a signal processor that adjusts the capacity of the variable capacity element, and an attenuator that attenuates electric signals outputted from the piezoelectric vibrator and outputs the attenuated signals to the signal processor. The signal processor measures the peak voltage of reverberation signals that are generated when ultrasounds are transmitted from the piezoelectric vibrator, calculates the Q value of the piezoelectric vibrator on the basis of the measured peak voltage and adjusts the capacity of the variable capacity element on the basis of the calculated Q value of the piezoelectric vibrator.

### SUMMARY OF INVENTION

The invention is defined in the independent claims to which reference should now be made. Advantageous features are set forth in the dependent claims.

The present invention enables accurate detection of anomalies of the ultrasonic transducer.

### BRIEF DESCRIPTION OF DRAWINGS

Fig. 1 is a schematic block diagram illustrating a configuration of an ultrasonic apparatus including an ultrasonic transducer.
Fig. 2 is a cross-sectional view of an ultrasonic transducer 100.
Fig. 3 is a block diagram illustrating a configuration of an ultrasonic apparatus according to a first example.
Fig. 4 is a diagram for explaining a first example of how a frequency estimating unit 116 estimates frequency fc.
Fig. 5 is a diagram for explaining a second example of how the frequency estimating unit 116 estimates frequency fc.
Fig. 6 is a block diagram illustrating a configuration of an ultrasonic apparatus according to a second example.
Fig. 7 is a diagram for explaining a first example of how a Q-factor estimating unit 216 estimates Q factor Qc.
Fig. 8 is a diagram for explaining a second example of how the Q-factor estimating unit 216 estimates Q factor Qc.
Fig. 9 is a graph showing a relation between adhesion of water droplets and change in resonant frequency.
Fig. 10 is a graph showing a relation between adhesion of water droplets and change in Q factor.
Fig. 11 is a graph showing a relation between adhesion of mud and change in resonant frequency.
Fig. 12 is a graph showing a relation between adhesion of mud and change in Q factor.
Fig. 13 is a flowchart for explaining a determination process performed in a first embodiment.
Fig. 14 is a block diagram illustrating a configuration of an ultrasonic apparatus according to the first embodiment.
Fig. 15 is a diagram for explaining an operation of an anomaly determining unit 319.
Fig. 16 is a block diagram illustrating a configuration of an ultrasonic apparatus according to a second embodiment.
Fig. 17 is a diagram for explaining a determination process performed by an anomaly determining unit 419.
Fig. 18 is a block diagram illustrating a configuration of an ultrasonic apparatus according to a third example.
Fig. 19 is a diagram for explaining a first example of how a temperature detecting unit 112 estimates temperature Tc.
Fig. 20 is a diagram for explaining a second example of how the temperature detecting unit 112 estimates temperature Tc.
Fig. 21 is a block diagram illustrating a configuration of an ultrasonic apparatus according to a fourth example.
Fig. 22 is a diagram for explaining a first example of estimation performed by a Q-factor estimating unit 616.
Fig. 23 is a diagram for explaining a second example of estimation performed by the Q-factor estimating unit 616.
Fig. 24 is a block diagram illustrating a configuration of an ultrasonic apparatus according to a modification of the fourth example.
Fig. 25 is a block diagram illustrating a configuration of an ultrasonic apparatus according to a fifth example.
Fig. 26 is a diagram for explaining estimation performed by a Q-factor estimating unit 816.
Fig. 27 is a block diagram illustrating a configuration of an ultrasonic apparatus according to a modification of the fifth example.

### DESCRIPTION OF EMBODIMENTS

Embodiments of the present invention will now be described in detail with reference to the drawings. The same or equivalent parts throughout the drawings are denoted by the same reference numerals and their description will not be repeated.

### General Configuration Common to Embodiments

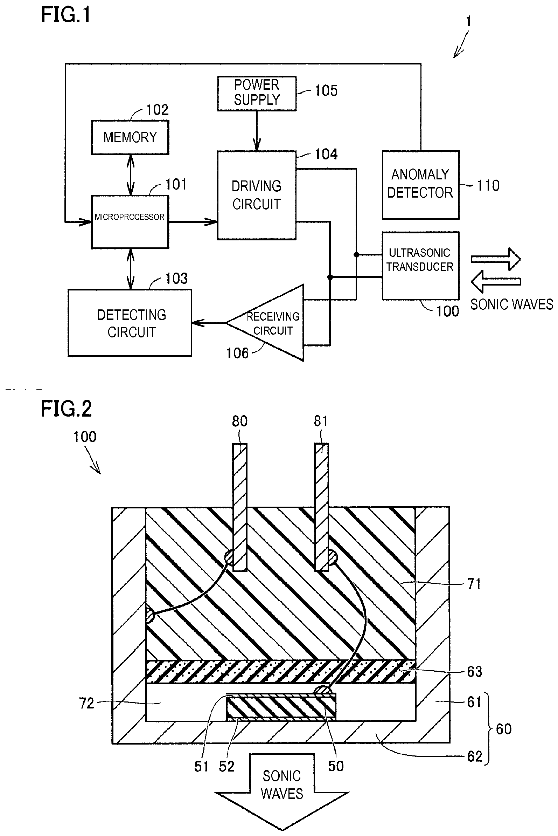

Fig. 1 is a schematic block diagram illustrating a configuration of an ultrasonic apparatus including an ultrasonic transducer. An ultrasonic apparatus 1 includes an ultrasonic transducer 100, a microprocessor 101, a memory 102, a detecting circuit 103, a driving circuit 104, a power supply 105, a receiving circuit 106, and an anomaly detector 110.

The microprocessor 101 reads data stored in the memory 102 and outputs, to the driving circuit 104, a control signal suitable for driving the ultrasonic transducer 100. The power supply 105 outputs, for example, a direct-current voltage of 12 V to the driving circuit 104. The driving circuit 104 generates an alternating-current voltage from the direct-current voltage on the basis of the control signal output from the microprocessor 101. The alternating-current voltage is boosted, as appropriate, by an amplifying circuit (not shown) and supplied to the ultrasonic transducer 100. The ultrasonic transducer 100 is driven, and ultrasonic waves are transmitted from the ultrasonic transducer 100, for example, into the air.

When the ultrasonic transducer 100 receives reflected waves from a target, a receive signal generated in the ultrasonic transducer 100 is transmitted as a voltage value to the receiving circuit 106, further transmitted through the detecting circuit 103, and input to the microprocessor 101. The microprocessor 101 thus acquires information about the presence and movement of the target. The ultrasonic apparatus 1 can be used, for example, as an ultrasonic sensor mounted on a vehicle.

### Ultrasonic Transducer 100

Fig. 2 is a cross-sectional view of the ultrasonic transducer 100. The configuration of the ultrasonic transducer disclosed in Fig. 2 is merely an example. Even when an ultrasonic transducer having a different configuration is used, the ultrasonic apparatus of the present embodiment can detect anomalies of the ultrasonic transducer. The ultrasonic transducer 100 illustrated in Fig. 2 includes a piezoelectric element 50, a case 60, a sound absorber 63, and terminals 80 and 81. The case 60 has a cylindrical shape with a bottom. The case 60 is made of, for example, light-weight aluminum with high elasticity. The case 60 is made, for example, by an aluminum forging or cutting process.

The case 60 includes a disk-shaped bottom portion 62 and a cylindrical tubular portion 61 disposed along the periphery of the bottom portion 62. The piezoelectric element 50 is made of, for example, PZT ceramic. The piezoelectric element 50 is disposed on the inner surface of the bottom portion 62 and bonded thereto with an adhesive. While the ultrasonic transducer 100 is being driven, the piezoelectric element 50 vibrates in bending directions together with the bottom portion 62. The inner space of the case 60 is filled with resin 71. The sound absorber 63 is formed by a molded body of sponge material or the like, and is interposed between the resin 71 and a portion 72 for accommodating the piezoelectric element 50. The sound absorber 63 is opposite, and at a distance from, the piezoelectric element 50.

The piezoelectric element 50 has two electrodes 51 and 52. The terminal 80 is electrically connected to the electrode 52, with a wire and the case 60 interposed therebetween. The terminal 81 is electrically connected to the electrode 51, with a wire interposed therebetween.

The ultrasonic transducer 100 illustrated in Fig. 1 may be a two-terminal transducer, such as that illustrated in Fig. 2, or may be a three-terminal transducer with GND and transmitting and receiving terminals.

### First Example

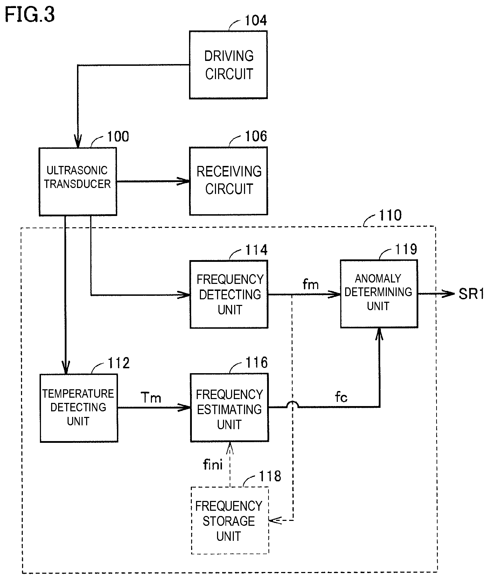

Fig. 3 is a block diagram illustrating a configuration of an ultrasonic apparatus according to a first example that is not part of the present invention. The ultrasonic apparatus of the first example includes the ultrasonic transducer 100, the driving circuit 104, the receiving circuit 106, and the anomaly detector 110.

The anomaly detector 110 includes a frequency detecting unit 114, a frequency storage unit 118, a frequency estimating unit 116, a temperature detecting unit 112, and an anomaly determining unit 119.

The driving circuit 104 outputs a driving signal in such a manner as to cause the ultrasonic transducer 100 to transmit sonic waves. The receiving circuit 106 receives sonic waves received by the ultrasonic transducer 100.

The frequency detecting unit 114 detects a resonant frequency fm of the ultrasonic transducer 100. The frequency storage unit 118 stores the resonant frequency fm of the ultrasonic transducer 100 at a predetermined temperature. For example, the resonant frequency fm detected by the frequency detecting unit 114 when, in the process of producing ultrasonic apparatuses at the factory, the ultrasonic transducer 100 is resonated in an atmosphere of predetermined temperature, is stored as an initial value fini in the frequency storage unit 118.

The frequency detecting unit 114 and the temperature detecting unit 112 of any known types may be used. For example, the frequency detecting unit 114 may be a circuit that measures a resonant frequency from a reverberation frequency, as described for example in Japanese Unexamined Patent Application Publication No. 2015-10888. The temperature detecting unit 112 may be a thermo-sensitive element, such as a thermistor, or may be configured to receive temperature information from an external temperature sensor mounted, for example, on a vehicle.

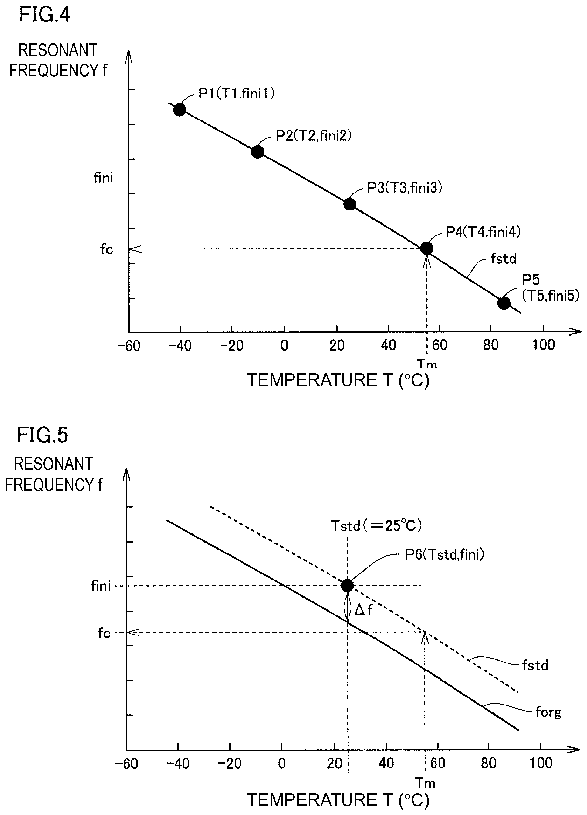

Fig. 4 is a diagram for explaining a first example of how the frequency estimating unit 116 estimates a frequency fc. Referring to Fig. 3 and Fig. 4, resonant frequencies (fini1, fini2, fini3, fini4, and fini5) are measured at given temperatures (T1, T2, T3, T4, and T5) when the ultrasonic transducer 100 in the factory default state is known to have no anomaly. There may be either one or a plurality of temperature points. The measured values at measurement points P1 to P5 are stored in the frequency storage unit 118. From the frequencies stored, the frequency estimating unit 116 determines a temperature-resonant frequency relation fstd for each individual ultrasonic transducer.

The temperature-resonant frequency relation can be calculated, for example, by storing table data of temperatures and resonant frequencies, and linearly interpolating the stored data. The relation may be mathematically expressed, for example, by a linear, quadratic, or polynomial expression, and coefficients in the mathematical expression may be determined from the measurement points P1 to P5.

From fstd given by such a mathematical expression or table, the frequency estimating unit 116 determines a value corresponding to a temperature Tm obtained from the temperature detecting unit 112 during use. The frequency estimating unit 116 thus estimates the estimated resonant frequency fc.

The temperature characteristic data may be measured, as illustrated in Fig. 4, for each individual ultrasonic transducer so that the data can be used to determine the estimated resonant frequency fc. It takes time, however, to measure and record the temperature characteristic data for each individual ultrasonic transducer. Therefore, it is more realistic to perform a second example (described below) in which the initial value fini at a standard temperature Tstd is measured and recorded for each individual transducer, and common standard data is used to compensate for a frequency shift Δf associated with a change in temperature characteristic.

Fig. 5 is a diagram for explaining the second example of how the frequency estimating unit 116 estimates the frequency fc. Referring to Fig. 3 and Fig. 5, the resonant frequency fini of the ultrasonic transducer 100 measured at a predetermined temperature (e.g., Tstd = 25°C) (corresponding to P6 in Fig. 5) is stored in the frequency storage unit 118. An ultrasonic transducer's temperature-resonant frequency characteristic (forg in Fig. 5), used in common by a plurality of ultrasonic apparatuses, is stored in the frequency estimating unit 116. The temperature-resonant frequency characteristic (forg) may be stored as a function (mathematical expression) of temperature, or may be stored as a data table like a map.

The shift Δf between the resonant frequency fini at the temperature Tstd, corresponding to each individual ultrasonic transducer 100, and the temperature-resonant frequency characteristic (forg), is calculated. The frequency shift Δf is a shift resulting from an individual difference. Then, the temperature-resonant frequency characteristic (forg) is shifted by Δf to determine the temperature-resonant frequency characteristic (fstd). From fstd given by a mathematical expression or table, the frequency estimating unit 116 determines a value corresponding to the temperature Tm obtained from the temperature detecting unit 112 during use. The frequency estimating unit 116 thus estimates the estimated resonant frequency fc.

Although not shown, a difference Δf1 between a resonant frequency corresponding to the predetermined temperature Tstd and a resonant frequency at the temperature Tm in the temperature-resonant frequency characteristic (forg) may be calculated and added to fini to determine fc.

Referring back to Fig. 3, upon receiving the current measured temperature Tm from the temperature detecting unit 112, the frequency estimating unit 116 outputs the estimated resonant frequency fc. Note that although fini stored in the frequency storage unit 118 is transmitted to the frequency estimating unit 116 in Fig. 3, fstd shown in Fig. 4 and Fig. 5 may be computed and stored in the frequency storage unit 118 in advance and referenced by the frequency estimating unit 116.

The anomaly determining unit 119 determines an anomaly of the ultrasonic transducer 100 on the basis of the temperature Tm detected by the temperature detecting unit 112, the resonant frequency fini stored in the frequency storage unit 118, and the resonant frequency fm detected by the frequency detecting unit 114. The anomaly determining unit 119 then outputs a signal SR1 representing the determination result.

More specifically, the frequency estimating unit 116 estimates the frequency estimate fc at the temperature Tm on the basis of the temperature Tm and the initial value fini, and the anomaly determining unit 119 compares the frequency estimate fc with the resonant frequency fm, which is a measured value, to determine whether the measured value is anomalous. For example, the anomaly determining unit 119 determines a positive-side threshold f(+) and a negative-side threshold f(-), with the frequency estimate fc at the center. Then, if f(-) < fm < f(+) is satisfied, the anomaly determining unit 119 determines that the measured value is normal, and if not satisfied, the anomaly determining unit 119 determines that the measured value is anomalous.

With the configuration described above, the ultrasonic apparatus according to the first example can detect anomalies of the ultrasonic transducer more accurately than before.

That is, the method described in Japanese Patent No. 2998232 (Patent Document 1) detects anomalies on the basis of changes in frequency, but the frequency also changes with temperature. For detection of anomalies, such as adhesion of a foreign substance (e.g., water or mud), it is necessary to determine whether the change in frequency is caused by a temperature change or by adhesion. Accordingly, the first example provides the temperature detecting unit 112, in addition to the frequency detecting unit 114, so that a change in frequency at a detected temperature is reflected in a determination threshold. This enables determination as to whether the change in frequency is caused by a temperature change or by an anomaly.

### Second Example

A resonant frequency is used as a parameter to determine an anomaly in the first example, but a Q factor is used in a second example. The Q factor is an index generally used as a value "quality factor (Q)" representing the degree of sharpness, that is, how sharp the resonance peak of the resonant circuit is. The inventors of the present application have discovered that an anomaly, such as adhesion of mud, can also be detected as a change in Q factor.

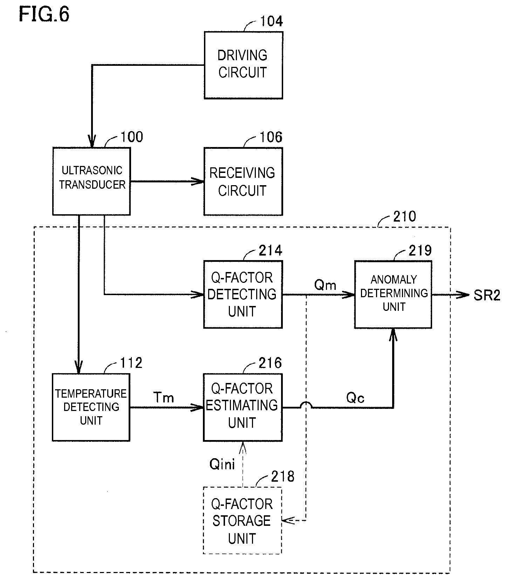

Fig. 6 is a block diagram illustrating a configuration of an ultrasonic apparatus according to the second example that is not part of the present invention. The ultrasonic apparatus according to the second example includes the ultrasonic transducer 100, the driving circuit 104, the receiving circuit 106, and an anomaly detector 210.

The anomaly detector 210 includes a Q-factor detecting unit 214, a Q-factor storage unit 218, a Q-factor estimating unit 216, the temperature detecting unit 112, and an anomaly determining unit 219.

The description of the driving circuit 104, the receiving circuit 106, and the temperature detecting unit 112, which are the same as those of the first example, will not be repeated here.

The Q-factor detecting unit 214 detects a Q factor Qm of the ultrasonic transducer 100. The Q-factor storage unit 218 stores the Q factor Qm of the ultrasonic transducer 100 at a predetermined temperature. For example, the Q factor Qm detected by the Q-factor detecting unit 214 when, in the process of producing ultrasonic apparatuses at the factory, the ultrasonic transducer 100 is vibrated in an atmosphere of predetermined temperature, is stored as an initial value Qini in the Q-factor storage unit 218.

The Q-factor detecting unit 214 of any known type may be used. For example, the Q-factor detecting unit 214 measures the Q factor from the attenuation curve of reverberation frequency as described, for example, in Japanese Unexamined Patent Application Publication No. 2015-10888.

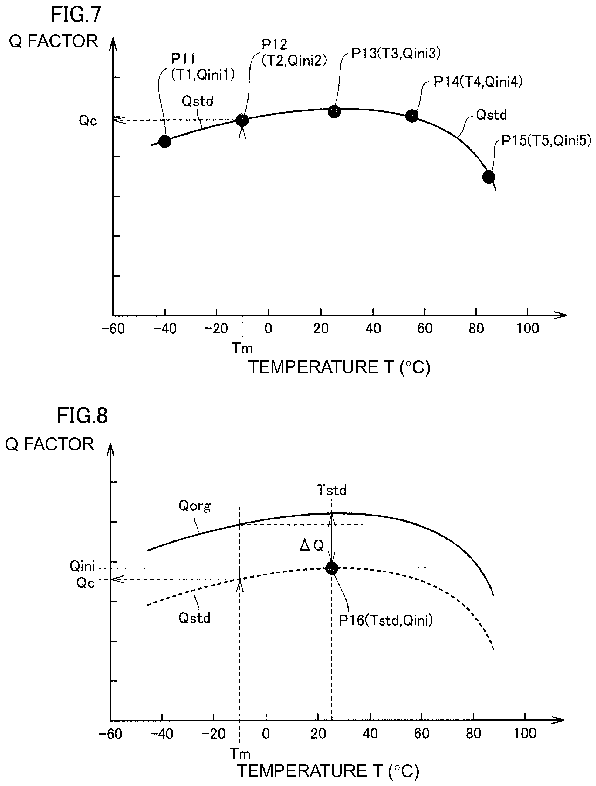

Fig. 7 is a diagram for explaining a first example of how the Q-factor estimating unit 216 estimates a Q factor Qc. Referring to Fig. 6 and Fig. 7, Q factors (Qini1, Qini2, Qini3, Qini4, and Qini5) are measured at given temperatures (T1, T2, T3, T4, and T5) when the ultrasonic transducer 100 in the factory default state is known to have no anomaly. There may be either one or a plurality of temperature points. The measured values at measurement points P11 to P15 are stored in the Q-factor storage unit 218. From the Q factors stored, the Q-factor estimating unit 216 determines a temperature-Q factor relation Qstd for each individual ultrasonic transducer.

The temperature-Q factor relation can be calculated, for example, by storing table data of temperatures and Q factors, and linearly interpolating the stored data. The relation may be mathematically expressed, for example, by a linear, quadratic, or polynomial expression, and coefficients in the mathematical expression may be determined from the measurement points P11 to P15.

From Qstd given by such a mathematical expression or table, the Q-factor estimating unit 216 determines a value corresponding to the temperature Tm obtained from the temperature detecting unit 112 during use. The Q-factor estimating unit 216 thus estimates the estimated Q factor Qc.

The temperature characteristic data may be measured, as illustrated in Fig. 7, for each individual ultrasonic transducer so that the data can be used to determine the estimated Q factor Qc. It takes time, however, to measure and record the temperature characteristic data for each individual ultrasonic transducer. Therefore, it is more realistic to perform a second example (described below) in which the initial value Qini at the standard temperature Tstd is measured and recorded for each individual transducer, and common data is used to compensate for a Q factor shift ΔQ associated with a change in temperature characteristic.

Fig. 8 is a diagram for explaining the second example of how the Q-factor estimating unit 216 estimates the Q factor Qc. Referring to Fig. 6 and Fig. 8, the Q factor Qini of the ultrasonic transducer 100 measured at a predetermined temperature (e.g., Tstd = 25°C) (corresponding to P16 in Fig 8) is stored in the Q-factor storage unit 218. An ultrasonic transducer's temperature-Q factor characteristic (Qorg), used in common by a plurality of ultrasonic apparatuses, is stored in the Q-factor estimating unit 216. The temperature-Q factor characteristic (Qorg) may be stored as a function (mathematical expression) of temperature, or may be stored as a data table like a map.

The Q factor shift ΔQ between the Q factor Qini at the temperature Tstd, corresponding to each individual ultrasonic transducer 100, and the temperature-Q factor characteristic (Qorg), is calculated. The Q factor shift ΔQ is a shift resulting from an individual difference. Then, the temperature-Q factor characteristic (Qorg) is shifted by ΔQ to determine the temperature-Q factor characteristic (Qstd). From Qstd given by a mathematical expression or table, the Q-factor estimating unit 216 determines a value corresponding to the temperature Tm obtained from the temperature detecting unit 112 during use. The Q-factor estimating unit 216 thus estimates the estimated Q factor Qc.

Although not shown, a difference ΔQ1 between a Q factor corresponding to the predetermined temperature Tstd and a Q factor at the temperature Tm in the temperature-Q factor characteristic (Qorg) may be calculated and added to Qini to determine Qc.

Upon receiving the current measured temperature Tm from the temperature detecting unit 112, the Q-factor estimating unit 216 outputs the estimated Q factor Qc. Note that although Qini stored in the Q-factor storage unit 218 is transmitted to the Q-factor estimating unit 216 in Fig. 6 Qstd shown in Fig. 7 and Fig. 8 may be computed and stored in the Q-factor storage unit 218 in advance and referenced by the Q-factor estimating unit 216.

The anomaly determining unit 219 determines an anomaly of the ultrasonic transducer 100 on the basis of the temperature Tm detected by the temperature detecting unit 112, the Q factor Qini stored in the Q-factor storage unit 218, and the Q factor Qm detected by the Q-factor detecting unit 214. The anomaly determining unit 219 then outputs a signal SR2 representing the determination result.

More specifically, the Q-factor estimating unit 216 estimates the Q factor estimate Qc at the temperature Tm on the basis of the temperature Tm and the initial value Qini, and the anomaly determining unit 219 compares the Q factor estimate Qc with Qm, which is a measured value, to determine whether the measured value is anomalous. For example, the anomaly determining unit 219 determines a positive-side threshold Q(+) and a negative-side threshold Q(-), with the Q factor estimate Qc at the center. Then, if Q(-) < Qm < Q(+) is satisfied, the anomaly determining unit 219 determines that the measured value is normal, and if not satisfied, the anomaly determining unit 219 determines that the measured value is anomalous.

With the configuration described above, the ultrasonic apparatus according to the second example performs temperature compensation of the Q factor, and thus can accurately detect anomalies of the ultrasonic transducer. Anomaly detection which involves using Q factors alone has not been conventionally performed. It can therefore be expected that previously undetectable anomalies will be detected.

### First Embodiment

In the second example, a Q factor (sharpness of resonance) is used to determine an anomaly. In a first embodiment of the invention, anomalies can be classified by observing changes in both resonant frequency and Q factor at the same time.

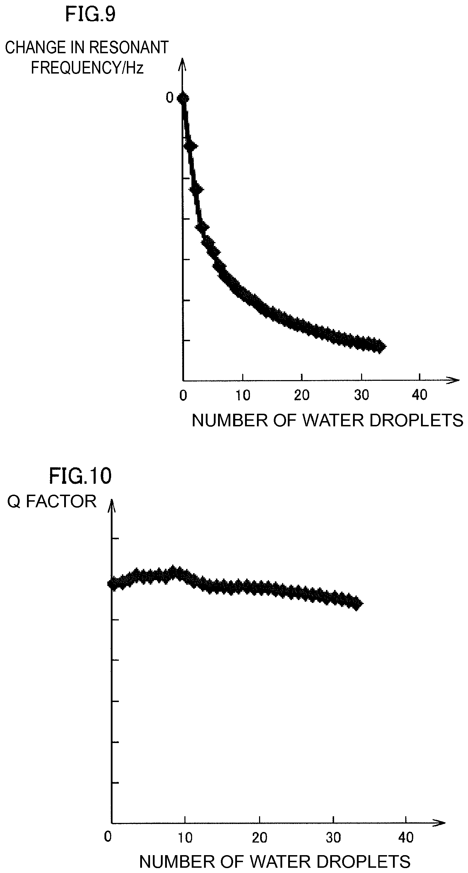

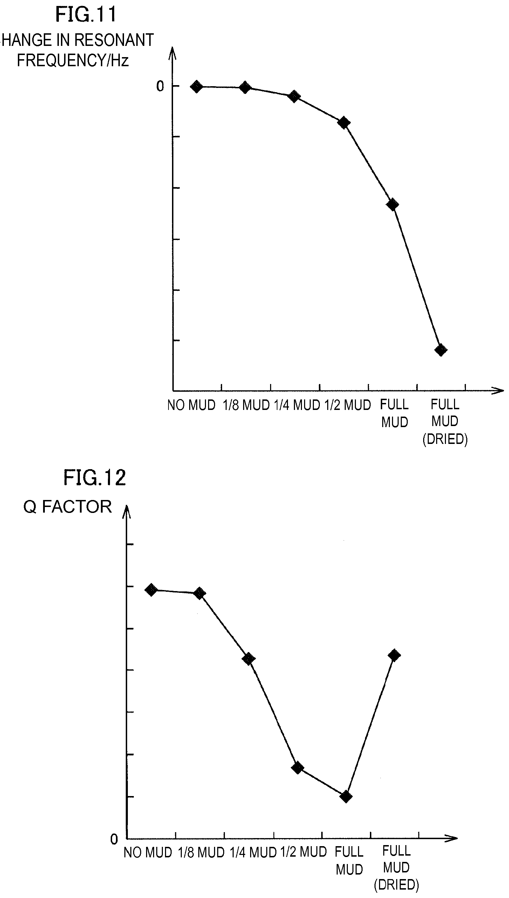

Fig. 9 is a graph showing a relation between adhesion of water droplets and change in resonant frequency. Fig. 10 is a graph showing a relation between adhesion of water droplets and change in Q factor. Fig. 11 is a graph showing a relation between adhesion of mud and change in resonant frequency. Fig. 12 is a graph showing a relation between adhesion of mud and change in Q factor.

As can be seen in Fig. 9 and Fig. 10, adhesion of water droplets to the vibrating surface of the ultrasonic transducer 100 changes the resonant frequency, but causes little change in Q factor. On the other hand, as can be seen in Fig. 11 and Fig. 12, adhesion of mud changes (or lowers) both the resonant frequency and the Q factor.

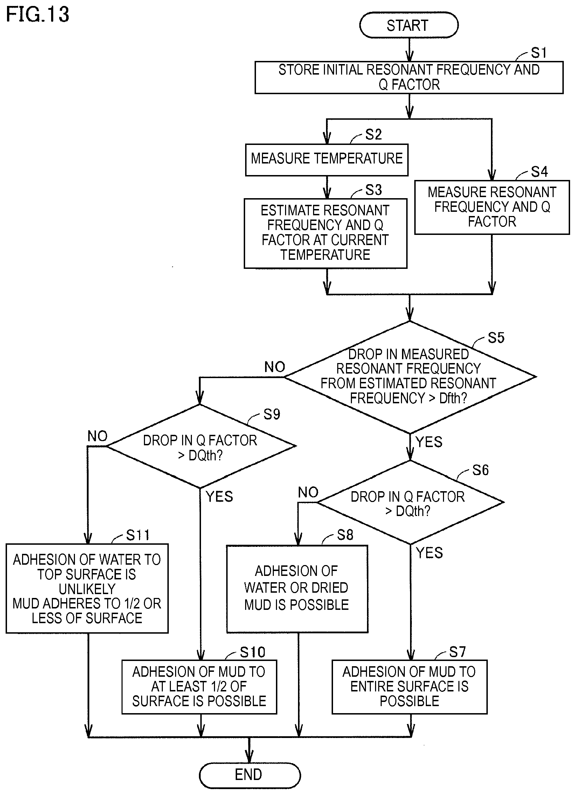

Fig. 13 is a flowchart for explaining a determination process performed in the first embodiment. Referring to Fig. 13, in step S1, an anomaly detector according to the first embodiment stores an initial resonant frequency and an initial Q factor in storage units. Next, the temperature Tm is measured in step S2, and the resonant frequency fc and the Q factor Qc at the current temperature Tm are estimated in step S3.

In parallel with the operations in steps S2 and S3, the current resonant frequency fm and the current Q factor Qm are measured in step S4.

After completion of the operations in step S3 and step S4, a determination is made as to whether a drop Df in the measured resonant frequency fm relative to the estimated resonant frequency fc is larger than a determination threshold Dfth in step S5. If Df > Dfth holds (YES in S5), the process proceeds from step S5 to step S6, where a determination is made as to whether a drop DQ in Q factor is larger than a determination threshold DQth.

If DQ > DQth holds in step S6 (YES in S6), the process proceeds to step S7, where it is determined that adhesion of mud to the entire resonating surface (or bottom portion 62 in Fig. 2) of the ultrasonic transducer 100 is possible. If DC > DQth does not hold (NO in S6), the process proceeds to step S8, where it is determined that adhesion of water to the resonating surface or adhesion of dried mud is possible.

If Df > Dfth does not hold in step S5 (NO in S5), the process proceeds from step S5 to step S9, where a determination is made as to whether the drop DQ in Q factor is larger than the determination threshold DQth.

If DQ > DQth holds in step S9 (YES in S9), the process proceeds to step S10, where it is determined that adhesion of mud to at least 1/2 of the resonating surface of the ultrasonic transducer 100 is possible. On the other hand, if DQ > DQth does not hold (NO in S9), the process proceeds to step S11, where it is determined that adhesion of water to the resonating surface is unlikely, and that mud adheres to 1/2 or less of the resonating surface.

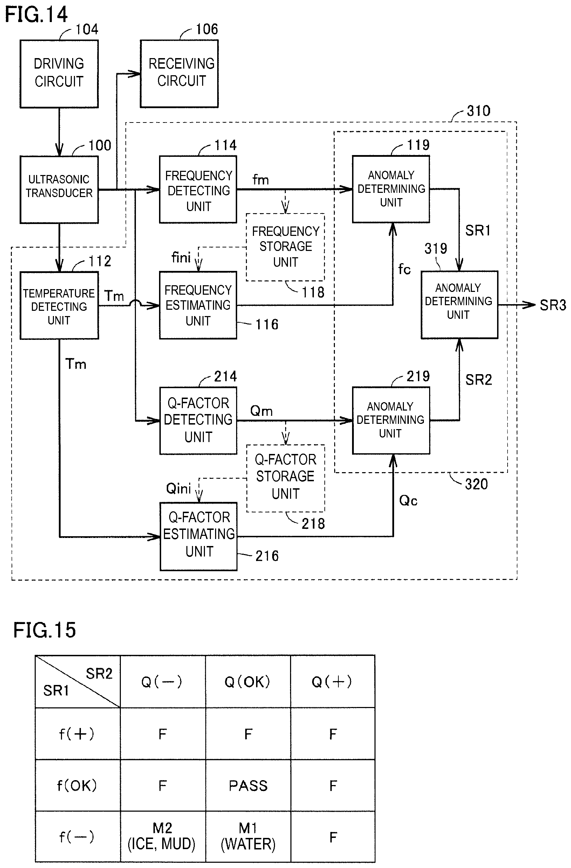

Fig. 14 is a block diagram illustrating a configuration of an ultrasonic apparatus according to the first embodiment. The ultrasonic apparatus according to the first embodiment includes the ultrasonic transducer 100, the driving circuit 104, the receiving circuit 106, and an anomaly detector 310.

The anomaly detector 310 includes the temperature detecting unit 112, the frequency detecting unit 114, the frequency storage unit 118, the frequency estimating unit 116, and the anomaly determining unit 119. The description of the temperature detecting unit 112, the frequency detecting unit 114, the frequency storage unit 118, the frequency estimating unit 116, and the anomaly determining unit 119, which are the same as those described in the first example (Fig. 3), will not be repeated here.

The anomaly detector 310 further includes the Q-factor detecting unit 214, the Q-factor storage unit 218, the Q-factor estimating unit 216, and the anomaly determining unit 219. The description of the Q-factor detecting unit 214, the Q-factor storage unit 218, the Q-factor estimating unit 216, and the anomaly determining unit 219, which are the same as those described in the second example (Fig. 6), will not be repeated here.

The anomaly detector 310 further includes an anomaly determining unit 319. The anomaly determining unit 319 forms a determining section 320 together with the anomaly determining units 119 and 219. The determining section 320 determines an anomaly of the ultrasonic transducer 100 on the basis of the temperature Tm detected by the temperature detecting unit 112, the resonant frequency fini stored in the frequency storage unit 118, the resonant frequency fm detected by the frequency detecting unit 114, the Q factor Qini stored in the Q-factor storage unit 218, and the Q factor Qm detected by the Q-factor detecting unit 214.

From the results of determinations made by the anomaly determining units 119 and 219, the anomaly determining unit 319 comprehensively determines the anomaly state. The anomaly determining unit 319 is capable of determining whether the anomaly state is either adhesion of water, or freezing or adhesion of mud.

Fig. 15 is a diagram for explaining an operation of the anomaly determining unit 319. Referring to Fig. 15, "f(OK)" means that the signal SR1 indicates that the resonant frequency fm is between the positive-side threshold f(+) and the negative-side threshold f(-) determined by the estimated resonant frequency fc, and "Q(OK)" means that the signal SR2 indicates that the Q factor Qm is between the positive-side threshold Q(+) and the negative-side threshold Q(-) determined by the estimated Q factor Qc.

Also in Fig. 15, "f(+)" means that fm is higher than the positive-side threshold f(+), and "f(-)" means that fm is lower than the negative-side threshold f(-).

Also in Fig. 15, "Q(+)" means that Qm is larger than the positive-side threshold Q(+), and "Q(-)" means that Qm is smaller than the negative-side threshold Q(-).

If the signal SR1 corresponds to "f(OK)" and the signal SR2 corresponds to "Q(OK)", the anomaly determining unit 319 outputs "PASS" as a determination result SR3. The output "PASS" indicates that the ultrasonic transducer 100 is normal.

If the signal SR1 corresponds to "f(-)" lower than the negative-side threshold and the signal SR2 corresponds to "Q(-)" lower than the negative-side threshold, the anomaly determining unit 319 outputs "M2" as the determination result SR3. The output "M2" indicates possible adhesion of ice or mud to the ultrasonic transducer 100.

If the signal SR1 corresponds to "f(-)" lower than the negative-side threshold and the signal SR2 corresponds to "Q(OK)", the anomaly determining unit 319 outputs "M1" as the determination result SR3. The output "M1" indicates possible adhesion of water to the ultrasonic transducer 100.

Otherwise, the letter "F" is shown in Fig. 15 and this indicates a possible failure of the ultrasonic transducer 100.

As described above, the ultrasonic apparatus of the first embodiment is capable of making a detail estimation of the anomaly state of the ultrasonic transducer 100. That is, the anomaly can be identified either as adhesion of water or as adhesion or freezing of mud, depending on the combination of frequency and Q factor. This is applicable, for example, to classification of higher-precision control and repair operations.

### Second Embodiment

A second embodiment is similar to the first embodiment, but differs therefrom in determination performed by the anomaly determining unit.

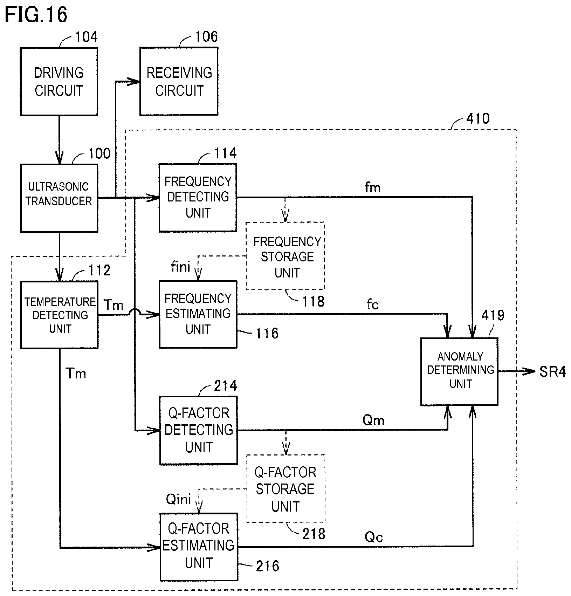

Fig. 16 is a block diagram illustrating a configuration of an ultrasonic apparatus according to the second embodiment. The ultrasonic apparatus of the second embodiment includes the ultrasonic transducer 100, the driving circuit 104, the receiving circuit 106, and an anomaly detector 410.

The anomaly detector 410 includes the temperature detecting unit 112, the frequency detecting unit 114, the frequency storage unit 118, the frequency estimating unit 116, the Q-factor detecting unit 214, the Q-factor storage unit 218, the Q-factor estimating unit 216, the temperature detecting unit 112, and an anomaly determining unit 419.

The temperature detecting unit 112, the frequency detecting unit 114, the frequency storage unit 118, and the frequency estimating unit 116 are the same as those described in the first example (Fig. 3). The Q-factor detecting unit 214, the Q-factor storage unit 218, and the Q-factor estimating unit 216 are the same as those described in the second example (Fig. 6). Therefore, the description of these components will not be repeated here.

The anomaly determining unit 419 determines an anomaly of the ultrasonic transducer 100 on the basis of the resonant frequency fc estimated by the frequency estimating unit 116, the resonant frequency fm detected by the frequency detecting unit 114, the Q factor Qc estimated by the Q-factor estimating unit 216, and the Q factor Qm detected by the Q-factor detecting unit 214.

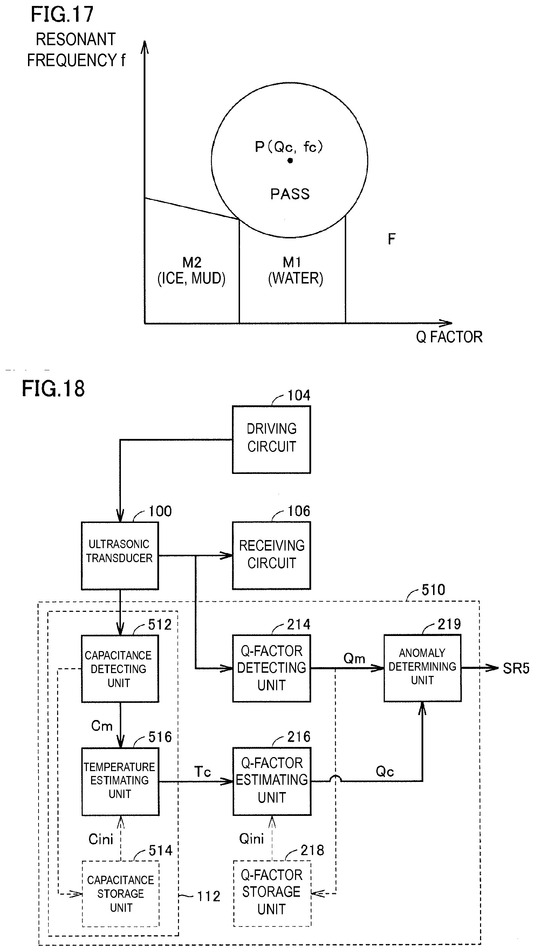

Fig. 17 is a diagram for explaining a determination process performed by the anomaly determining unit 419. The anomaly determining unit 419 comprehensively determines an anomaly from the following four values: the measured and estimated resonant frequencies, and the measured and estimated Q factors. Referring to Fig. 17, the anomaly determining unit 419 determines whether an anomaly occurs on the basis of whether coordinates Pm(Qm, fm) are in a PASS region centered at coordinates P(Qc, fc) in the Q-f plane. Thus, as illustrated in Fig. 17, detailed setting of regions corresponding to the determination results PASS, M1, M2, and F can be made in accordance with, for example, actual experimental results.

The second embodiment is configured similarly to the first embodiment, but differs therefrom in that instead of combining the results individually determined for the resonant frequency and the Q factor, a determination can be made at a time on the basis of the combination of the resonant frequency and the Q factor which are in a combined state from the beginning. Thus, with the configuration of the second embodiment, a high-precision determination can be made with efficiency.

### Third Example

In the first and second examples, and first and second embodiments, a temperature sensor of any of various known types is used as the temperature detecting unit 112. In the third example, however, the temperature detecting unit 112 performs temperature estimation by detecting a change in the capacitance of the piezoelectric element of the ultrasonic transducer 100. Although this temperature detecting unit 112 is applicable to any of the first and second examples, and first and second embodiments, the temperature detecting unit 112 applied to the second example will be described as an example.

Fig. 18 is a block diagram illustrating a configuration of an ultrasonic apparatus according to the third example that is not part of the present invention. Referring to Fig. 18, the ultrasonic apparatus of the third example includes the ultrasonic transducer 100, the driving circuit 104, the receiving circuit 106, and an anomaly detector 510.

The anomaly detector 510 includes the Q-factor detecting unit 214, the Q-factor storage unit 218, the Q-factor estimating unit 216, the temperature detecting unit 112, and the anomaly determining unit 219.

The description of the driving circuit 104, the receiving circuit 106, the Q-factor detecting unit 214, the Q-factor storage unit 218, the Q-factor estimating unit 216, and the anomaly determining unit 219, which are the same as those described in the first and second examples, will not be repeated here.

The temperature detecting unit 112 includes a capacitance detecting unit 512, a capacitance storage unit 514, and a temperature estimating unit 516.

The capacitance detecting unit 512 connects a capacitor having a predetermined capacitance value to the capacitor of the piezoelectric element of the ultrasonic transducer 100 in such a manner that they are connected in series, and supplies an alternating-current voltage waveform. A voltage at the connection node of the two capacitors connected in series is a voltage obtained by dividing the alternating-current voltage by the capacitance ratio, and thus the capacitance value of the piezoelectric element can be detected.

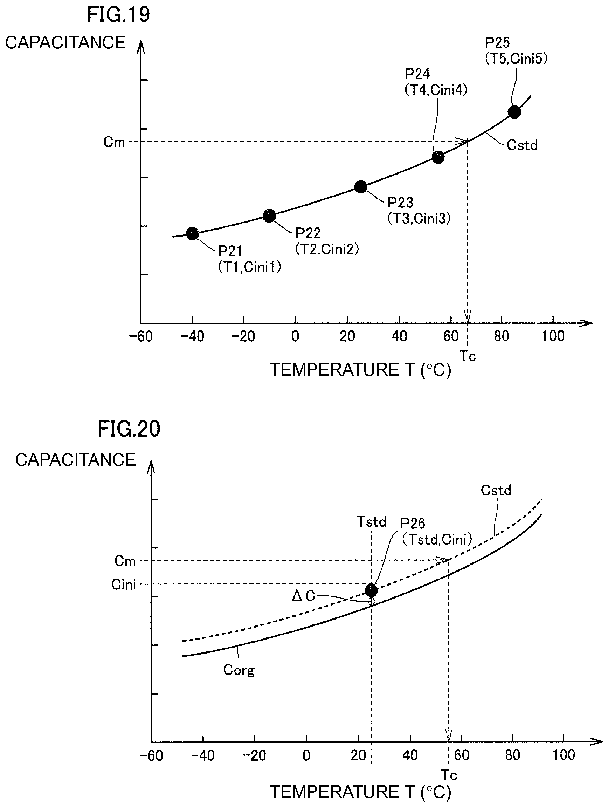

Fig. 19 is a diagram for explaining a first example of how the temperature detecting unit 112 estimates a temperature Tc. Referring to Fig. 18 and Fig. 19, capacitance values (Cini1, Cini2, Cini3, Cini4, and Cini5) are measured at given temperatures (T1, T2, T3, T4, and T5) when the ultrasonic transducer 100 in the factory default state is known to have no anomaly. There may be either one or a plurality of temperature points. The measured values at measurement points P21 to P25 are stored in the capacitance storage unit 514. From the capacitance values stored, the temperature estimating unit 516 determines a temperature-capacitance value relation for each individual ultrasonic transducer.

The temperature-capacitance value relation can be calculated, for example, by storing table data of temperatures and capacitance values, and linearly interpolating the stored data. The relation may be mathematically expressed, for example, by a linear, quadratic, or polynomial expression, and coefficients in the mathematical expression may be determined from the measurement points P21 to P25.

From a temperature-capacitance value characteristic Cstd given by such a mathematical expression or table, the temperature estimating unit 516 determines a temperature corresponding to a capacitance value Cm obtained from the capacitance detecting unit 512 during use. The temperature estimating unit 516 thus estimates the estimated temperature Tc.

The temperature-capacitance characteristic data may be measured, as illustrated in Fig. 19, for each individual ultrasonic transducer so that the data can be used to determine the estimated temperature Tc. It takes time, however, to measure and record the temperature-capacitance characteristic data for each individual ultrasonic transducer. Therefore, it is more realistic to perform a second example (described below) in which the initial value Cini at the standard temperature Tstd is measured and recorded for each individual transducer, and common data is used to compensate for a capacitance shift ΔC associated with a change in temperature characteristic.

Fig. 20 is a diagram for explaining the second example of how the temperature detecting unit 112 estimates the temperature Tc. Referring to Fig. 18 and Fig. 20, the capacitance value Cini of the ultrasonic transducer 100 measured at a predetermined temperature (e.g., Tstd = 25°C) (corresponding to P26 in Fig. 20) is stored in the capacitance storage unit 514. An ultrasonic transducer's temperature-capacitance characteristic (Corg), used in common by a plurality of ultrasonic apparatuses, is stored in the temperature estimating unit 516. The temperature-capacitance characteristic (Corg) may be stored as a function (mathematical expression) of temperature, or may be stored as a data table like a map.

The capacitance value shift ΔC between the capacitance value Cini at the temperature Tstd, corresponding to each individual ultrasonic transducer 100, and the temperature-capacitance characteristic (Corg), is calculated. The capacitance value shift ΔC is a shift resulting from an individual difference. Then, the temperature-capacitance characteristic (Corg) is shifted by ΔC to determine the temperature-capacitance characteristic (Cstd). From Cstd given by a mathematical expression or table, the temperature estimating unit 516 determines a temperature corresponding to the capacitance value Cm obtained from the capacitance detecting unit 512 during use. The temperature estimating unit 516 thus estimates the estimated temperature Tc.

Although not shown, the temperature estimating unit 516 may calculate a difference ΔC1 between the measured capacitance value Cm and the capacitance value Cini read from the capacitance storage unit 514 and output, as the estimated temperature Tc, a temperature at which Corg is changed by ΔC1 from that at Tstd.

Upon receiving the estimated temperature Tc from the temperature detecting unit 112, the Q-factor estimating unit 216 outputs the estimated Q factor Qc. The anomaly determining unit 219 performs an operation similar to that described in the second example and outputs a signal SR5 representing the determination result.

The ultrasonic apparatus according to the third example detects a temperature on the basis of a detected change in the capacitance of the piezoelectric element originally included in the ultrasonic transducer 100, and thus does not require, for example, an additional temperature sensor.

The third example, which requires no additional sensor, can achieve the functions of the first and second examples, and first and second embodiments at low cost.

### Fourth Example

In the first to third examples, and first and second embodiments, for example, the Q factor estimate Qc is determined through the use of the temperature Tm or Tc. In a fourth example, the resonant frequency fc or the Q factor estimate Qc is estimated directly from the measured capacitance value Cm of the ultrasonic transducer 100.

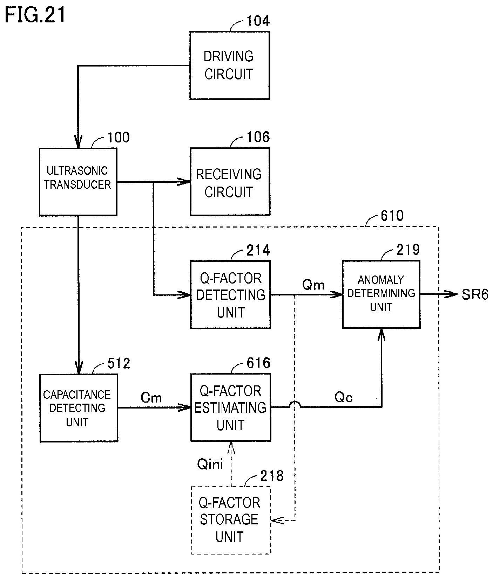

Fig. 21 is a block diagram illustrating a configuration of an ultrasonic apparatus according to the fourth example that is not part of the present invention. Referring to Fig. 21, the ultrasonic apparatus of the fourth example includes the ultrasonic transducer 100, the driving circuit 104, the receiving circuit 106, and an anomaly detector 610.

The anomaly detector 610 includes the Q-factor detecting unit 214, the Q-factor storage unit 218, the capacitance detecting unit 512, a Q-factor estimating unit 616, and the anomaly determining unit 219.

The description of the driving circuit 104, the receiving circuit 106, the Q-factor detecting unit 214, the Q-factor storage unit 218, the capacitance detecting unit 512, and the anomaly determining unit 219, which are the same as those described in the first, second, and third examples, will not be repeated here.

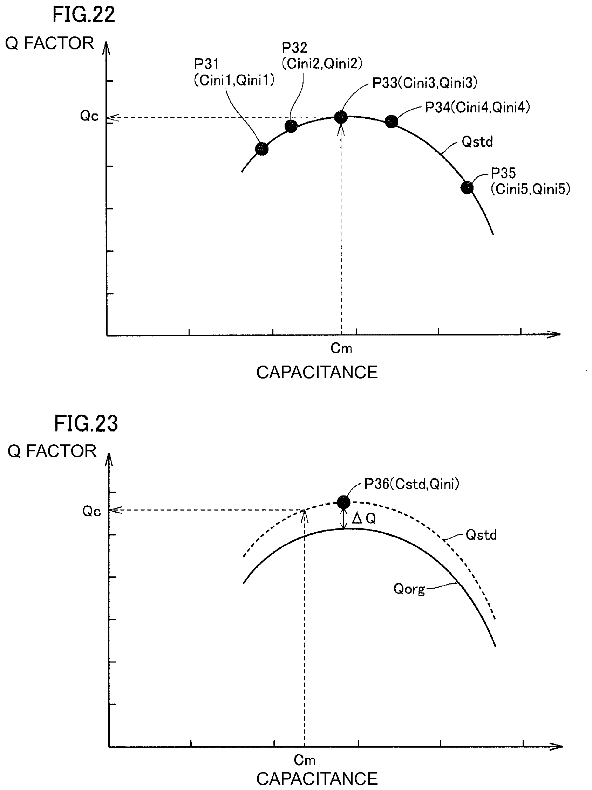

Fig. 22 is a diagram for explaining a first example of estimation performed by the Q-factor estimating unit 616. Referring to Fig. 21 and Fig. 22, Q factors (Qini1, Qini2, Qini3, Qini4, and Qini5) are measured at capacitance values (Cini1, Cini2, Cini3, Cini4, and Cini5) corresponding to given temperatures (T1, T2, T3, T4, and T5) when the ultrasonic transducer 100 in the factory default state is known to have no anomaly. There may be either one or a plurality of temperature points. The measured values at measurement points P31 to P35 are stored in the Q-factor storage unit 218. From the Q factors stored, the Q-factor estimating unit 616 determines a capacitance value-Q factor relation Qstd for each individual ultrasonic transducer.

The capacitance value-Q factor relation can be calculated, for example, by storing table data of capacitance values and Q factors, and linearly interpolating the stored data. The relation may be mathematically expressed, for example, by a linear, quadratic, or polynomial expression, and coefficients in the mathematical expression may be determined from the measurement points P31 to P35.

From Qstd given by such a mathematical expression or table, the Q-factor estimating unit 616 determines a value corresponding to the capacitance value Cm obtained from the capacitance detecting unit 512 during use. The Q-factor estimating unit 616 thus estimates the estimated Q factor Qc.

The capacitance value-Q factor characteristic data may be measured, as illustrated in Fig. 22, for each individual ultrasonic transducer so that the data can be used to determine the estimated Q factor Qc. It takes time, however, to measure and record the capacitance value-Q factor characteristic data for each individual ultrasonic transducer. Therefore, it is more realistic to perform a second example (described below) in which the initial value Qini at the capacitance value Cstd corresponding to the standard temperature Tstd is measured and recorded for each individual transducer, and common data is used to compensate for a Q factor shift ΔQ associated with a change in capacitance characteristic.

Fig. 23 is a diagram for explaining a second example of estimation performed by the Q-factor estimating unit 616. Referring to Fig. 21 and Fig. 23, the capacitance value Cstd and the Q factor Qini of the ultrasonic transducer 100 measured at a predetermined temperature (e.g., Tstd = 25°C)(corresponding to P36 in Fig. 23) are stored in the Q-factor storage unit 218. An ultrasonic transducer's capacitance value-Q factor characteristic (Qorg), used in common by a plurality of ultrasonic apparatuses, is stored in the Q-factor estimating unit 616. The capacitance value-Q factor characteristic (Qorg) may be stored as a function (mathematical expression) of the capacitance value or may be stored as a data table like a map.

The Q factor shift ΔQ between the Q factor Qini at the capacitance Cstd, corresponding to each individual ultrasonic transducer 100, and the capacitance value-Q factor characteristic (Qorg), is calculated. The Q factor shift ΔQ is a shift resulting from an individual difference. Then, the capacitance value-Q factor characteristic (Qorg) is shifted by ΔQ to determine the capacitance value-Q factor characteristic (Qstd). From Qstd given by a mathematical expression or table, the Q-factor estimating unit 616 determines a value corresponding to the capacitance value Cm obtained from the capacitance detecting unit 512 during use. The Q-factor estimating unit 616 thus estimates the estimated Q factor Qc.

Although not shown, a difference ΔQ1 between a Q factor corresponding to the predetermined capacitance value Cstd and a Q factor at the capacitance value Cm in the capacitance value-Q factor characteristic (Qorg) may be calculated and added to Qini to determine Qc.

On the basis of the temperature Tm detected by the temperature detecting unit 112, the Q factor Qini stored in the Q-factor storage unit 218, and the Q factor Qm detected by the Q-factor detecting unit 214, the anomaly determining unit 219 determines an anomaly of the ultrasonic transducer 100 and outputs a signal SR6 representing the determination result.

In the fourth example, the temperature detecting unit 112 of the first to third examples, and first and second embodiments is replaced by the capacitance detecting unit 512. The frequency estimating unit and the Q-factor estimating unit 616 estimate the Q factor directly from the measured capacitance Cm, not from the temperature.

With this configuration, the functions can be achieved at low cost. That is, since the same results as those in the third example are obtained without the temperature detecting unit, the same functions can be achieved at lower cost.

### Modification of Fourth Example

Although the Q factor estimate Qc has been described as an example in the fourth example, application to the resonant frequency fc is also possible by combining with the first example.

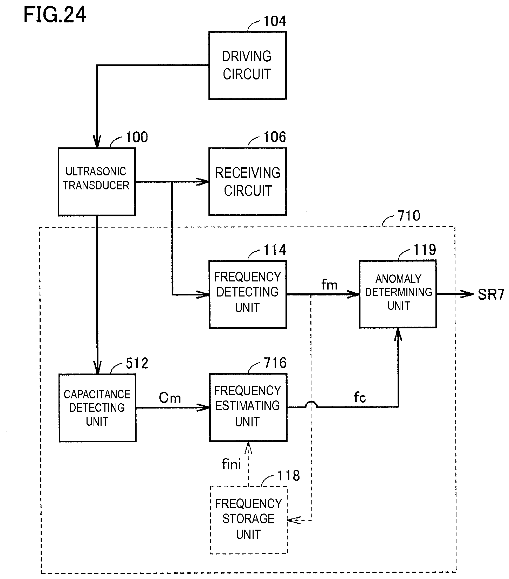

Fig. 24 is a block diagram illustrating a configuration of an ultrasonic apparatus according to a modification of the fourth example. The ultrasonic apparatus according to this modification of the fourth example includes the ultrasonic transducer 100, the driving circuit 104, the receiving circuit 106, and an anomaly detector 710.

The anomaly detector 710 includes the frequency detecting unit 114, the frequency storage unit 118, a frequency estimating unit 716, the capacitance detecting unit 512, and the anomaly determining unit 119.

The description of the driving circuit 104, the receiving circuit 106, the frequency detecting unit 114, and the frequency storage unit 118, which are the same as those illustrated in Fig. 3, will not be repeated here. The description of the capacitance detecting unit 512, which is the same as that illustrated in Fig. 21, will not be repeated here.

The frequency estimating unit 716 shifts the capacitance-resonant frequency characteristic by taking fini into account to determine the frequency estimate fc. Thus, in the case with the resonant frequency, advantageous effects similar to those achieved in the fourth example are achieved.

### Fifth Example

In the fourth example, the Q factor estimate Qc varying with changes in ambient environment, such as temperature, is determined directly through the use of map data or relational expression representing a relation between capacitance and Q factor. However, there are manufacturing variations among ultrasonic transducers 100. Applying common map data to different ultrasonic transducers 100 may lead to larger errors. A fifth example is characterized in that a capacitance change rate is determined so as to reduce errors caused by applying such common map data or relational expression. Determining a capacitance change rate is applicable to any of the first and second examples, and first and second embodiments.

For example, as for the capacitance of the piezoelectric element, even when there are manufacturing variations in capacitance value, the change rate (%) of capacitance value associated with changes in temperature does not significantly vary from one element to another. Therefore, if the relation between capacitance change rates and Q factors is expressed in the form of a map or a relational expression, the resulting data can be used as common data during manufacture.

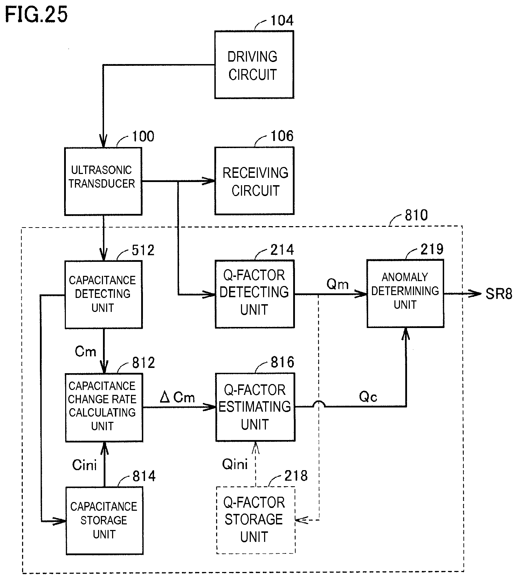

Fig. 25 is a block diagram illustrating a configuration of an ultrasonic apparatus according to the fifth example that is not part of the present invention. Referring to Fig. 25, the ultrasonic apparatus of the fifth example includes the ultrasonic transducer 100, the driving circuit 104, the receiving circuit 106, and an anomaly detector 810.

The anomaly detector 810 includes the Q-factor detecting unit 214, the Q-factor storage unit 218, the capacitance detecting unit 512, a capacitance storage unit 814, a capacitance change rate calculating unit 812, a Q-factor estimating unit 816, and the anomaly determining unit 219.

The description of the driving circuit 104, the receiving circuit 106, the Q-factor detecting unit 214, the Q-factor storage unit 218, the capacitance detecting unit 512, and the anomaly determining unit 219, which are the same as those described in the first, second, and third examples, will not be repeated here.

The capacitance change rate calculating unit 812 outputs, as a capacitance change rate ΔCm (%), the rate of change of the capacitance value Cm detected by the capacitance detecting unit 512 with respect to the capacitance value Cini. The Q-factor estimating unit 816 stores a relation between capacitance change rates, ΔCini1, ΔCini2, ΔCini3, ΔCini4, and ΔCini5, of the ultrasonic transducer 100 and Q factors at given temperatures (T1, T2, T3, T4, and T5) (capacitance change rate-Q factor characteristic). This relation is a value that is applicable in common to individual elements.

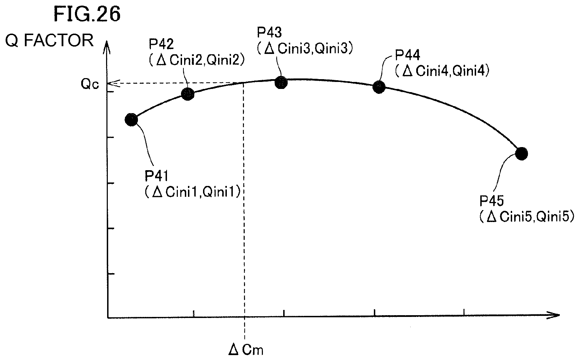

Fig. 26 is a diagram for explaining estimation performed by the Q-factor estimating unit 816. The Q-factor estimating unit 816 calculates the capacitance change rate-Q factor characteristic by linear interpolation between measurement points P41 to P45. The relation may be mathematically expressed, for example, by a polynomial expression, and coefficients in the mathematical expression may be determined from the measurement points P41 to P45. The Q-factor estimating unit 816 determines a Q factor corresponding to the capacitance change rate ΔCm from the capacitance change rate-Q factor characteristic, and outputs the estimate Qc.

With the configuration of the fifth example, even when there are individual variations in capacitance, errors in estimates caused by the use of a common map or mathematical expression can be reduced by input of the capacitance change rate to the Q-factor estimating unit.

### Modification of Fifth Example

Although the Q factor estimate Qc has been described as an example in the fifth example, application to the resonant frequency fc is also possible by combining with the first example.

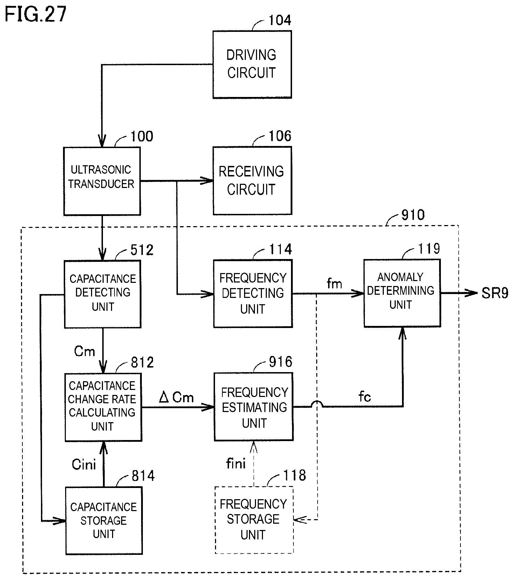

Fig. 27 is a block diagram illustrating a configuration of an ultrasonic apparatus according to a modification of the fifth example. The ultrasonic apparatus according to this modification of the fifth example includes the ultrasonic transducer 100, the driving circuit 104, the receiving circuit 106, and an anomaly detector 910.

The anomaly detector 910 includes the frequency detecting unit 114, the frequency storage unit 118, a frequency estimating unit 916, the capacitance detecting unit 512, the capacitance storage unit 814, the capacitance change rate calculating unit 812, and the anomaly determining unit 119.

The description of the driving circuit 104, the receiving circuit 106, the frequency detecting unit 114, and the frequency storage unit 118, which are the same as those illustrated in Fig. 3, will not be repeated here. The description of the capacitance detecting unit 512, the capacitance change rate calculating unit 812, and the capacitance storage unit 814, which are the same as those illustrated in Fig. 25, will not be repeated here.

The frequency estimating unit 916 determines a resonant frequency corresponding to the capacitance change rate ΔCm from the capacitance change rate-resonant frequency characteristic, and outputs the estimated resonant frequency fc.

Advantageous effects similar to those of the fifth example can thus be achieved in the case with a resonant frequency.

The embodiments and examples disclosed herein should be considered illustrative, not restrictive, in all aspects. The scope of the present invention is defined by the appended claims, not by the explanation described above. It should be noted and understood that there can be improvements and modifications made of the present invention described in detail above without departing from the scope of the invention as set forth in the accompanying claims.

### Reference Signs List

1: ultrasonic apparatus, 50: piezoelectric element, 51, 52: electrode, 60: case, 61: tubular portion, 62: bottom portion, 63: sound absorber, 71: resin, 80, 81: terminal, 100: ultrasonic transducer, 101: microprocessor, 102: memory, 103: detecting circuit, 104: driving circuit, 105: power supply, 106: receiving circuit, 110, 210, 310, 410, 510, 610, 710, 810, 910: anomaly detector, 112: temperature detecting unit, 114: frequency detecting unit, 116: frequency estimating unit, 118: frequency storage unit, 119, 219, 319, 419: anomaly determining unit, 214: Q-factor detecting unit, 216, 616, 816: Q-factor estimating unit, 218: Q-factor storage unit, 320: determining section, 512: capacitance detecting unit, 514, 814: capacitance storage unit, 516: temperature estimating unit, 812: capacitance change rate calculating unit

## Claims

1. An ultrasonic apparatus (1) comprising:
an ultrasonic transducer (100);
a driving circuit (104) configured to cause the ultrasonic transducer (100) to transmit sonic waves;
a receiving circuit (106) configured to receive sonic waves received by the ultrasonic transducer (100);
a frequency detecting unit (114) configured to detect a resonant frequency of the ultrasonic transducer (100);
a first storage unit (118) configured to store first premeasured data that is measured when the ultrasonic transducer (100) is in a factory default state known to have no anomaly, said first premeasured data including one or more resonant frequencies of the ultrasonic transducer (100) at one or more predetermined temperatures;
a Q-factor detecting unit (214) configured to detect a Q factor of the ultrasonic transducer (100);
a second storage unit (218) configured to store second premeasured data that is measured when the ultrasonic transducer (100) is in a factory default state known to have no anomaly, said second premeasured data including one or more Q factors of the ultrasonic transducer (100) at the one or more predetermined temperatures;
a temperature detecting unit (112);
a resonance frequency estimating unit (116) configured to estimate a resonance frequency of the ultrasonic transducer (100) at the temperature detected by the temperature detecting unit (112), on the basis of the stored first premeasured data;
a Q factor estimating unit (216) configured to estimate a Q factor of the ultrasonic transducer (100) at the temperature detected by the temperature detecting unit (112), on the basis of the stored second premeasured data; and
a determining unit (320,119,219,319,419) configured to determine an anomaly of the ultrasonic transducer (100) on the basis of the resonant frequency estimated by the resonant frequency estimating unit (116) and the Q factor estimated by the Q factor estimating unit (216), the resonant frequency detected by the frequency detecting unit (114) and the Q factor detected by the Q-factor detecting unit (214).

2. The ultrasonic apparatus (1) according to claim 1 wherein:
the determining unit (320,119,319) determines whether the resonant frequency detected by the frequency detecting unit (114) is normal by determining if the detected resonance frequency falls within a threshold range centered around the resonance frequency estimated by the resonance frequency estimating unit (116); and
the determining unit (320,219,319) determines whether the Q factor detected by the Q factor detecting unit (214) is normal by determining if the detected Q factor falls within a threshold range centered around the Q factor estimated by the Q factor estimating unit (216).

3. The ultrasonic apparatus (1) according to claim 1 wherein the determining unit (419) determines whether an anomaly occurs on the basis of whether coordinates Pm(Qm, fm) are in a PASS region centered at coordinates P(Qc, fc) in the Q-f plane, in which Qm is the Q factor detected by the Q-factor detecting unit (214), fm is the resonant frequency detected by the frequency detecting unit (114), Qc is the Q factor estimated by the Q factor estimating unit (216), and fc is the resonant frequency estimated by the resonant frequency estimating unit (116).

4. The ultrasonic apparatus (1) according to any preceding claim, wherein the temperature detecting unit (112) includes:
a capacitance detecting unit (512) configured to detect a capacitance of the ultrasonic transducer (100),
a capacitance storage unit (514) configured to store one or more capacitance values of the ultrasonic transducer (100) at the one or more predetermined temperatures, and
a temperature estimating unit (516) configured to estimate a temperature on the basis of the capacitance detected by the capacitance detecting unit (512) and the one or more capacitance values stored by the capacitance storage unit (514).

5. An ultrasonic apparatus (1) comprising:
an ultrasonic transducer (100);
a driving circuit (104) configured to cause the ultrasonic transducer (100) to transmit sonic waves;
a receiving circuit (106) configured to receive sonic waves received by the ultrasonic transducer (100);
a frequency detecting unit (114) configured to detect a resonant frequency of the ultrasonic transducer (100);
a first storage unit (118) configured to store first premeasured data that is measured when the ultrasonic transducer (100) is in a factory default state known to have no anomaly, said first premeasured data including one or more resonant frequencies of the ultrasonic transducer (100) at one or more predetermined temperatures;
a Q-factor detecting unit (214) configured to detect a Q factor of the ultrasonic transducer (100);
a second storage unit (218) configured to store second premeasured data that is measured when the ultrasonic transducer (100) is in a factory default state known to have no anomaly, said second premeasured data including one or more Q factors of the ultrasonic transducer (100) at the one or more predetermined temperatures;
a capacitance detecting unit (512) configured to detect a capacitance of the ultrasonic transducer (100);
a capacitance storage unit configured to store third premeasured data that is measured when the ultrasonic transducer (100) is in a factory default state known to have no anomaly, said third premeasured data including one or more capacitance values of the ultrasonic transducer (100) at the one or more predetermined temperatures;
a resonance frequency estimating unit (116) configured to estimate a resonance frequency of the ultrasonic transducer (100) at the capacitance detected by the capacitance detecting unit (512), on the basis of the stored first and third premeasured data;
a Q factor estimating unit (216) configured to estimate a Q factor of the ultrasonic transducer (100) at the capacitance detected by the capacitance detecting unit (512), on the basis of the stored second and third premeasured data; and
a determining unit (320,119,219,319,419) configured to determine an anomaly of the ultrasonic transducer (100) on the basis of the resonant frequency estimated by the resonant frequency estimating unit (116) and the Q factor estimated by the Q factor estimating unit (216), the resonant frequency detected by the frequency detecting unit (114) and the Q factor detected by the Q-factor detecting unit (214).

## Patentansprüche

1. Ultraschallvorrichtung (1), die Folgendes beinhaltet:
einen Ultraschallwandler (100);
eine Ansteuerschaltung (104), die zum Veranlassen des Ultraschallwandlers (100) zum Senden von Schallwellen konfiguriert ist;
eine Empfangsschaltung (106), die zum Empfangen von durch den Ultraschallwandler (100) empfangenen Schallwellen konfiguriert ist;
eine Frequenzerfassungseinheit (114), die zum Erfassen einer Resonanzfrequenz des Ultraschallwandlers (100) konfiguriert ist;
eine erste Speichereinheit (118), die zum Speichern von ersten vorgemessenen Daten konfiguriert ist, die gemessen werden, wenn der Ultraschallwandler (100) in einem werkseitigen Standardzustand ist, von dem bekannt ist, dass er keine Anomalie aufweist, wobei die genannten ersten vorgemessenen Daten ein oder mehr Resonanzfrequenzen des Ultraschallwandlers (100) bei ein oder mehr vorbestimmten Temperaturen umfassen;
eine Q-Faktor-Erfassungseinheit (214), die zum Erfassen eines Q-Faktors des Ultraschallwandlers (100) konfiguriert ist;
eine zweite Speichereinheit (218), die zum Speichern von zweiten vorgemessenen Daten konfiguriert ist, die gemessen werden, wenn der Ultraschallwandler (100) in einem werkseitigen Standardzustand ist, von dem bekannt ist, dass er keine Anomalie aufweist, wobei die genannten zweiten vorgemessenen Daten ein oder mehr Q-Faktoren des Ultraschallwandlers (100) bei den ein oder mehr vorbestimmten Temperaturen umfassen;
eine Temperaturerfassungseinheit (112);
eine Resonanzfrequenzschätzungseinheit (116), die zum Schätzen einer Resonanzfrequenz des Ultraschallwandlers (100) bei der durch die Temperaturerfassungseinheit (112) erfassten Temperatur auf der Grundlage der gespeicherten ersten vorgemessenen Daten konfiguriert ist;
eine Q-Faktor-Schätzungseinheit (216), die zum Schätzen eines Q-Faktors des Ultraschallwandlers (100) bei der durch die Temperaturerfassungseinheit (112) erfassten Temperatur auf der Grundlage der gespeicherten zweiten vorgemessenen Daten konfiguriert ist; und
eine Bestimmungseinheit (320, 119, 219, 319, 419), die zum Bestimmen einer Anomalie des Ultraschallwandlers (100) auf der Grundlage der durch die Resonanzfrequenzschätzungseinheit (116) geschätzten Resonanzfrequenz und des durch die Q-Faktor-Schätzungseinheit (216) geschätzten Q-Faktors, der durch die Frequenzerfassungseinheit (114) erfassten Resonanzfrequenz und des durch die Q-Faktor-Erfassungseinheit (214) erfassten Q-Faktors konfiguriert ist.

2. Ultraschallvorrichtung (1) nach Anspruch 1, wobei:
die Bestimmungseinheit (320, 119, 319) durch Bestimmen, ob die erfasste Resonanzfrequenz in einen Schwellenbereich fällt, der um die durch die Resonanzfrequenzschätzungseinheit (116) geschätzte Resonanzfrequenz zentriert ist, bestimmt, ob die durch die Frequenzerfassungseinheit (114) erfasste Resonanzfrequenz normal ist; und
die Bestimmungseinheit (320, 219, 319) durch Bestimmen, ob der erfasste Q-Faktor in einen Schwellenbereich fällt, der um den durch die Q-Faktor-Schätzungseinheit (216) geschätzten Q-Faktor zentriert ist, bestimmt, ob der durch die Q-Faktor-Erfassungseinheit (214) erfasste Q-Faktor normal ist.

3. Ultraschallvorrichtung (1) nach Anspruch 1, wobei die Bestimmungseinheit (419) auf der Grundlage dessen, ob Koordinaten Pm(Qm, fm) in einer PASS-Region liegen, die an Koordinaten P(Qc, fc) in der Q-f-Ebene zentriert ist, bei denen Qm der durch die Q-Faktor-Erfassungseinheit (214) erfasste Q-Faktor ist, fm die durch die Frequenzerfassungseinheit (114) erfasste Resonanzfrequenz ist, Qc der durch die Q-Faktor-Schätzungseinheit (216) geschätzte Q-Faktor ist und fc die durch die Resonanzfrequenzschätzungseinheit (116) geschätzte Resonanzfrequenz ist, bestimmt, ob eine Anomalie auftritt.

4. Ultraschallvorrichtung (1) nach einem der vorhergehenden Ansprüche, wobei die Temperaturerfassungseinheit (112) Folgendes umfasst:
eine Kapazitätserfassungseinheit (512), die zum Erfassen einer Kapazität des Ultraschallwandlers (100) konfiguriert ist,
eine Kapazitätsspeichereinheit (514), die zum Speichern von ein oder mehr Kapazitätswerten des Ultraschallwandlers (100) bei den ein oder mehr vorbestimmten Temperaturen konfiguriert ist, und
eine Temperaturschätzungseinheit (516), die zum Schätzen einer Temperatur auf der Grundlage der durch die Kapazitätserfassungseinheit (512) erfassten Kapazität und der ein oder mehr durch die Kapazitätsspeichereinheit (514) gespeicherten Kapazitätswerte konfiguriert ist.

5. Ultraschallvorrichtung (1), die Folgendes beinhaltet:
einen Ultraschallwandler (100);
eine Ansteuerschaltung (104), die zum Veranlassen des Ultraschallwandlers (100) zum Senden von Schallwellen konfiguriert ist;
eine Empfangsschaltung (106), die zum Empfangen von durch den Ultraschallwandler (100) empfangenen Schallwellen konfiguriert ist;
eine Frequenzerfassungseinheit (114), die zum Erfassen einer Resonanzfrequenz des Ultraschallwandlers (100) konfiguriert ist;
eine erste Speichereinheit (118), die zum Speichern von ersten vorgemessenen Daten konfiguriert ist, die gemessen werden, wenn der Ultraschallwandler (100) in einem werkseitigen Standardzustand ist, von dem bekannt ist, dass er keine Anomalie aufweist, wobei die genannten ersten vorgemessenen Daten ein oder mehr Resonanzfrequenzen des Ultraschallwandlers (100) bei ein oder mehr vorbestimmten Temperaturen umfassen;
eine Q-Faktor-Erfassungseinheit (214), die zum Erfassen eines Q-Faktors des Ultraschallwandlers (100) konfiguriert ist;
eine zweite Speichereinheit (218), die zum Speichern von zweiten vorgemessenen Daten konfiguriert ist, die gemessen werden, wenn der Ultraschallwandler (100) in einem werkseitigen Standardzustand ist, von dem bekannt ist, dass er keine Anomalie aufweist, wobei die genannten zweiten vorgemessenen Daten ein oder mehr Q-Faktoren des Ultraschallwandlers (100) bei den ein oder mehr vorbestimmten Temperaturen umfassen;
eine Kapazitätserfassungseinheit (512), die zum Erfassen einer Kapazität des Ultraschallwandlers (100) konfiguriert ist,
eine Kapazitätsspeichereinheit, die zum Speichern von dritten vorgemessenen Daten konfiguriert ist, die gemessen werden, wenn der Ultraschallwandler (100) in einem werkseitigen Standardzustand ist, von dem bekannt ist, dass er keine Anomalie aufweist, wobei die genannten dritten vorgemessenen Daten ein oder mehr Kapazitätswerte des Ultraschallwandlers (100) bei den ein oder mehr vorbestimmten Temperaturen umfassen;
eine Resonanzfrequenzschätzungseinheit (116), die zum Schätzen einer Resonanzfrequenz des Ultraschallwandlers (100) bei der durch die Kapazitätserfassungseinheit (512) erfassten Kapazität auf der Grundlage der gespeicherten ersten und dritten vorgemessenen Daten konfiguriert ist;
eine Q-Faktor-Schätzungseinheit (216), die zum Schätzen eines Q-Faktors des Ultraschallwandlers (100) bei der durch die Kapazitätserfassungseinheit (512) erfassten Temperatur auf der Grundlage der gespeicherten zweiten und dritten vorgemessenen Daten konfiguriert ist; und
eine Bestimmungseinheit (320, 119, 219, 319, 419), die zum Bestimmen einer Anomalie des Ultraschallwandlers (100) auf der Grundlage der durch die Resonanzfrequenzschätzungseinheit (116) geschätzten Resonanzfrequenz und des durch die Q-Faktor-Schätzungseinheit (216) geschätzten Q-Faktors, der durch die Frequenzerfassungseinheit (114) erfassten Resonanzfrequenz und des durch die Q-Faktor-Erfassungseinheit (214) erfassten Q-Faktors konfiguriert ist.

## Revendications

1. Appareil à ultrasons (1) comprenant :
un transducteur à ultrasons (100) ;
un circuit d'attaque (104) configuré pour faire que le transducteur à ultrasons (100) transmette des ondes soniques ;
un circuit de réception (106) configuré pour recevoir des ondes soniques reçues par le transducteur à ultrasons (100) ;
une unité de détection de fréquence (114) configurée pour détecter une fréquence de résonance du transducteur à ultrasons (100) ;
une première unité de stockage (118) configurée pour stockes des premières données pré-mesurées qui sont mesurées lorsque le transducteur à ultrasons (100) est dans un état implicite d'usine connu pour n'avoir aucune anomalie, lesdites premières données pré-mesurées comprenant une ou plusieurs fréquences de résonance du transducteur à ultrasons (100) à une ou plusieurs températures prédéterminées ;
une unité de détection de facteur Q (214) configurée pour détecter un facteur Q du transducteur à ultrasons (100) ;
une deuxième unité de stockage (218) configurée pour stocker des deuxièmes données pré-mesurées qui sont mesurées lorsque le transducteur à ultrasons (100) est dans un état implicite d'usine connu pour n'avoir aucune anomalie, lesdites deuxièmes données pré-mesurées comprenant un ou plusieurs facteurs Q du transducteur à ultrasons (100) à l'une ou plusieurs températures prédéterminées ;
une unité de détection de température (112) ;
une unité d'estimation de fréquence de résonance (116) configurée pour estimer une fréquence de résonance du transducteur à ultrasons (100) à la température détectée par l'unité de détection de température (112), sur la base des premières données pré-mesurées stockées ;
une unité d'estimation de facteur Q (216) configurée pour estimer un facteur Q du transducteur à ultrasons (100) à la température détectée par l'unité de détection de température (112), sur la base des deuxièmes données pré-mesurées stockées ; et
une unité de détermination (320, 119, 219, 319, 419) configurée pour déterminer une anomalie du transducteur à ultrasons (100) sur la base de la fréquence de résonance estimée par l'unité d'estimation de fréquence de résonance (116) et du facteur Q estimé par l'unité d'estimation de facteur Q (216), la fréquence de résonance étant détectée par l'unité de détection de fréquence (114) et le facteur Q étant détecté par l'unité de détection de facteur Q (214).

2. Appareil à ultrasons (1) selon la revendication 1, dans lequel :
l'unité de détermination (320, 119, 319) détermine si la fréquence de résonance détectée par l'unité de détection de fréquence (114) est normale en déterminant si la fréquence de résonance détectée tombe dans une plage seuil centrée autour de la fréquence de résonance estimée par l'unité d'estimation de fréquence de résonance (116) ; et
l'unité de détermination (320, 219, 319) détermine si le facteur Q détecté par l'unité de détection de facteur Q (214) est normale en déterminant si le facteur Q détecté tombe dans une plage seuil centrée autour du facteur Q estimé par l'unité d'estimation de facteur Q (216).

3. Appareil à ultrasons (1) selon la revendication 1, dans lequel l'unité de détermination (419) détermine si une anomalie survient sur la base de si des coordonnées Pm(Qm, fm) sont dans une région PASS centrée aux coordonnées P(Qc, fc) dans le plan Q-f, dans laquelle Qm est le facteur Q détecté par l'unité de détection de facteur Q (214), fm est la fréquence de résonance détectée par l'unité de détection de fréquence (114), Qc est le facteur Q estimé par l'unité d'estimation de facteur Q (216), et fc est la fréquence de résonance estimée par l'unité d'estimation de fréquence de résonance (116).

4. Appareil à ultrasons (1) selon l'une quelconque des revendications précédentes, dans lequel l'unité de détection de température (112) comprend :
une unité de détection de capacitance (512) configurée pour détecter une capacitance du transducteur à ultrasons (100),
une unité de stockage de capacitance (514) configurée pour stocker une ou plusieurs valeurs de capacitance du transducteur à ultrasons (100) à l'une ou plusieurs températures prédéterminées, et
une unité d'estimation de température (516) configurée pour estimer une température sur la base de la capacitance détectée par l'unité de détection de capacitance (512) et de l'une ou plusieurs valeurs de capacitance stockées par l'unité de stockage de capacitance (514).

5. Appareil à ultrasons (1) comprenant :
un transducteur à ultrasons (100) ;
un circuit d'attaque (104) configuré pour faire que le transducteur à ultrasons (100) transmette des ondes soniques ;
un circuit de réception (106) configuré pour recevoir des ondes soniques reçues par le transducteur à ultrasons (100) ;
une unité de détection de fréquence (114) configurée pour détecter une fréquence de résonance du transducteur à ultrasons (100) ;
une première unité de stockage (118) configurée pour stocker des premières données pré-mesurées qui sont mesurées lorsque le transducteur à ultrasons (100) est dans un état implicite d'usine connu pour n'avoir aucune anomalie, lesdites premières données pré-mesurées comprenant une ou plusieurs fréquences de résonance du transducteur à ultrasons (100) à une ou plusieurs températures prédéterminées ;
une unité de détection de facteur Q (214) configurée pour détecter un facteur Q du transducteur à ultrasons (100) ;
une deuxième unité de stockage (218) configurée pour stocker des deuxièmes données pré-mesurées qui sont mesurées lorsque le transducteur à ultrasons (100) est dans un état implicite d'usine connu pour n'avoir aucune anomalie, lesdites deuxièmes données pré-mesurées comprenant un ou plusieurs facteurs Q du transducteur à ultrasons (100) à l'une ou plusieurs températures prédéterminées ;
une unité de détection de capacitance (512) configurée pour détecter une capacitance du transducteur à ultrasons (100) ;
une unité de stockage de capacitance configurée pour stocker des troisièmes données pré-mesurées qui sont mesurées lorsque le transducteur à ultrasons (100) est dans un état implicite d'usine connu pour n'avoir aucune anomalie, lesdites troisièmes données pré-mesurées comprenant une ou plusieurs valeurs de capacitance du transducteur à ultrasons (100) à l'une ou plusieurs températures prédéterminées ;
une unité d'estimation de fréquence de résonance (116) configurée pour estimer une fréquence de résonance du transducteur à ultrasons (100) à la capacitance détectée par l'unité de détection de capacitance (512), sur la base des premières et troisièmes données pré-mesurées stockées ;
une unité d'estimation de facteur Q (216) configurée pour estimer un facteur Q du transducteur à ultrasons (100) à la capacitance détectée par l'unité de détection de capacitance (512), sur la base des deuxièmes et troisièmes données pré-mesurées stockées ; et
une unité de détermination (320, 119, 219, 319, 419) configurée pour déterminer une anomalie du transducteur à ultrasons (100) sur la base de la fréquence de résonance estimée par l'unité d'estimation de fréquence de résonance (116) et du facteur Q estimé par l'unité d'estimation de facteur Q (216), la fréquence de résonance étant détectée par l'unité de détection de fréquence (114) et le facteur Q étant détecté par l'unité de détection de facteur Q (214).
